# EUROPÄISCHE PATENTANMELDUNG

(11) **EP 1 231 698 A2**
(43) Veröffentlichungstag der Anmeldung: **14.08.2002**
(21) Anmeldenummer: 02100119.3
(22) Anmeldetag: 08.02.2002
(51) Int. Cl.: H02J 9/00

(54) **Aufwachschaltung für ein elektrisches Gerät**

(30) Priorität: 10.02.2001 DE 10106132
(71) Anmelder: Philips Corporate Intellectual Property GmbH, 52066 Aachen (DE); Koninklijke Philips Electronics N.V., 5621 BA Eindhoven (NL)
(72) Erfinder: Deppe, Carsten, Weisshausstrasse 2 52066, Aachen (DE); Lürkens, Peter Dr., Weisshausstrasse 2 52066, Aachen (DE); Dürbaum, Thomas Dr., Weisshausstrasse 2 Aachen, 52066 (DE); Wendt, Matthias Dr., Weisshausstrasse 2 Aachen, 52066 (DE); Loef, Christoph, Weisshausstrasse 52066, Aachen (DE); Sauerländer, Georg, Weisshausstrasse 2 52066, Aachen (DE)
(74) Vertreter: Volmer, Georg, Dipl.-Ing.

(57) **Zusammenfassung**

Die Erfindung bezieht sich auf eine Aufwachschaltung, ein elektrisches Gerät mit einer Aufwachschaltung, ein Verfahren zur Steuerung des elektrischen Geräts und eine Netzteil-Baugruppe. Während bei herkömmlichen Geräten im "Standby"-Betrieb das Netzteil und die Steuerelektronik im dauerhaften Betrieb sind und daher einen hohen Stromverbrauch aufweisen, schlägt die Erfindung für die Einsparung von Energie bei beibehaltenem Bedienkomfort eine Lösung vor, bei der im "Standby"-Betrieb das Netzteil ausgeschaltet ist. Eine Aufwachschaltung bleibt, bevorzugt gespeist durch ein Energiepufferelement, im "Standby"-Betrieb aktiv und überwacht Signaleingänge auf Aufwachereignisse. Beim Auftreten eines Aufwachereignisses schaltet die Aufwachschaltung das Netzteil ein.

## Beschreibung

Die Erfindung betrifft eine Aufwachschaltung, ein elektrisches Gerät mit einer Aufwachschaltung, ein Verfahren zur Steuerung eines elektrischen Geräts und eine Netzteilbaugruppe.

Eine Vielzahl von elektrischen Geräten, beispielsweise Videorecorder, Satellitenreceiver, Fernsehgeräte, Set-Top-Boxen, Computermonitore usw. verfügen über einen sogenannten "Standby"-Modus. Diese Geräte werden aus dem Stromversorgungsnetz mit elektrischer Energie versorgt. Hierfür weisen sie entsprechende Netzteile auf. Sehr häufig finden hier neben 50 Hz Transformator basierten Stromversorgungen auch sogenannte SMPS (Switch Mode Power Supply = Schaltnetzteil) Verwendung. Solche Schaltnetzteile arbeiten mit einer stabilisierten oder unstabilisierten Eingangsgleichspannung, die in der Regel durch Gleichrichtung aus dem Netz entnommen wird Diese Gleichspannung wird mit Hilfe eines oder mehrerer elektronischer Schalter in eine Wechselspannung oder einen Wechselstrom umgewandelt, dessen Frequenz üblicherweise hochfrequent (d.h. größer, oft sogar wesentlich größer als die Netzfrequenz) ist. Die Wechselspannung bzw. der Wechselstrom wird zur weiteren Spannungswandlung bzw. Energieübertragung zur Erzeugung einer oder mehrerer Gleich- und/oder Wechselspannungen genutzt. Eine im Vergleich zur Netzfrequenz deutlich höhere Schaltfrequenz ermöglicht die Verwendung wesentlich kleinerer magnetischer Bauteile. Über ein geeignetes Ansteuerverfahren der Schalter (zB. Frequenzregelung, Tastgradregelung oder andere dem Fachmann bekannte Verfahren) ist eine Regelung der Ausgangsspannung möglich.

Häufig verfügen solche Geräte, beispielsweise Fernseher, über einen Ausschalter, mit dem das Netzteil vollständig vom Netz getrennt wird und das Gerät so "hart", ausgeschaltet ist, d.h. elektrisch vollständig vom Netz getrennt, beispielsweise durch einen mechanischen Schalter. In diesem Ausschaltzustand verbraucht das Gerät keine elektrische Energie. Ein Gerät kann jedoch auch in den Standby-Modus umgeschaltet werden, beispielsweise durch Drücken des "Aus"-Knopfes auf einer üblichen drahtlosen Fernbedienung zB. einer Funk- oder Infrarot-Fernbedienung. Dann werden zwar die Funktionseinheiten des Geräts (hier beispielsweise die Bildröhre, der Empfangsteil etc.) ausgeschaltet, üblicherweise mit Relais oder elektronischen Schaltern oder durch drastische Reduzierung der sekundärseitigen Versorgungsspannung Im Standby-Modus wird das Netzteil allerdings nicht vom Netz getrennt, denn zumindest eine Einheit des Geräts, die hier als "Aufwachschaltung" bezeichnet wird, bleibt im Standby-Modus aktiv.

In herkömmlichen Geräten umfasst die Aufwachschaltung häufig die gesamte Steuerungselektronik mit einem zentralen Mikrocontroller. Diese bezieht ihre Stromversorgung aus dem Netzteil des Geräts. Beispielsweise im Fall einer Infrarot-Fernbedienung überwacht die Aufwachschaltung im Standby-Betrieb ständig eventuell eintreffende Infrarot-Fernsteuersignale. Solche eintreffenden Signale werden decodiert, wobei der Mikrocontroller entscheidet, ob ein empfangenes Signal ein Aufwachereignis darstellt. Mit dem Begriff "Aufwachereignis" werden hier solche Ereignisse bezeichnet, die zum Einschalten des Geräts führen sollen. Beispielsweise bei einem Fernseher könnte dies ein Druck auf den Ein/Aus-Taster der Fernbedienung sein oder das Betätigen einer der numerischen Programmtasten. Wird ein solches Signal von der Aufwachschaltung empfangen, decodiert und erkannt, schaltet die Aufwachschaltung die Funktionseinheiten wieder ein, so dass das Gerät dann im vollen Betriebszustand ist.

In der Praxis hat sich gezeigt, dass viele Geräte, vor allem Geräte der Unterhaltungselektronik, von den Verbrauchern fast durchgängig im Standby-Modus betrieben und nicht vom Netz getrennt werden, denn nur im Standby-Modus sind Komfort-Funktionen, wie das Einschalten per Fernbedienung oder auch zeitgesteuertes Einschalten (zB. Videorecorder) bzw. durch das Eingangssignal gesteuertes Einschalten (zB. Videorecorder mit VPS-Signal oder Computer-Monitor bei Videosignal) möglich.

Eine Anzahl von Geräten weisen hierbei überhaupt keinem "harten", d.h. mechanischen Netzschalter mehr auf. Solche Netzschalter sind aufgrund der hohen Anforderungen, insbesondere an Isolierung, Strombelastung und Kabelführung im Gerät, recht teuer. Bei Geräten mit einer Uhr ist eine vollständige Netztrennung oft auch nicht gewünscht, da sonst nach jedem Anschalten die Uhr neu gestellt werden müsste, falls kein Pufferspeicher oder automatisches Stellen durch Eingangssignale (Funkuhr, Internet, Videotext, Radio Daten System) möglich ist.

Im Standby-Modus verbrauchen die Geräte allerdings relativ viel elektrische Energie. Dies beruht einerseits auf Verlustleistung des Netzteils, andererseits aus der Leistungsaufnahme der verwendeten Aufwachschaltungen, die häufig die gesamte Steuerungselektronik, inklusive Mikrocontroller umfassen. Insgesamt kommt es so zu einem Restverbrauch von 1 bis 10 Watt.

Es ist Aufgabe der Erfindung, die Leistungsaufnahme von elektrischen Geräten im Ruhezustand weiter zu verringern, wobei gleichzeitig jeweils gewünschte Komfortfunktionen erhalten bleiben.

Diese Aufgabe wird gelöst durch eine Aufwachschaltung nach Anspruch 1, ein elektrisches Gerät nach Anspruch 15, ein Verfahren nach Anspruch 22 zur Steuerung eines elektrischen Geräts und eine Netzteilbaugruppe nach Anspruch 25 für ein elektrisches Gerät. Abhängige Ansprüche beziehen sich auf vorteilhafte Ausführungsformen der Erfindung

Eine erfindungsgemäße Aufwachschaltung für ein elektrisches Gerät weist einen oder mehrere Signaleingänge auf. Hierbei handelt es sich um elektrische Anschlüsse der Schaltung die so ausgelegt sind, dass beispielsweise ein Empfänger für Fernsteuersignale, ein Ein/Aus-Taster, ein Nutzsignal (zB. Videosignal oder Audiosignal), eine digitale Schnittstelle oder ein anderer Signalgeber an diesem Eingang angeschlossen werden kann und die entsprechenden Signale verarbeitet werden können. Es ist auch möglich, dass der Eingang so ausgelegt ist, dass verschiedene Signalgeber (z.B. Taster, IR-Empfänger, etc.) an denselben Eingang angeschlossen werden können. Bevorzugt sind die Eingänge hinsichtlich ihrer Auswertung (bspw. Verstärkung, Schwellenwertdetektion, ggf. Signaldecodierung) programmierbar.

Weiter weist die Aufwachschaltung eine Steuereinheit auf. Diese Bezeichnung ist hier rein funktionell gewählt. Es kann sich hierbei um eine Logik-Schaltung handeln, die verschiedene Eingaben in einer vorgegebenen Weise verknüpft, so dass ein entsprechendes Ausgangssignal gegeben wird. Hierfür wird der Einsatz einer programmierbaren Logikschaltung vorgeschlagen, es kann aber auch eine fest verdrahtete Schaltung sein. Die Schaltungen können außer reinen Logik-Verknüpfungen (AND, OR, etc.) auch weitere Elemente und Funktionen, darunter Register, Schieberegister, Rechenoperationen, Vergleicher, Timer usw. umfassen. Denkbar sind ebenso auch auf Software basierende Lösungen, bei denen die Steuerfunktionen von einem auf einem Mikrocontroller ablaufenden Programm übernommen werden. Es ist bevorzugt, dass die Steuereinheit in ihrer Funktion programmierbar ist.

Die Aufwachschaltung weist erfindungsgemäß zudem einen Steuerausgang zur Steuerung eines Netzteils auf. Unter einer solchen Steuerung eines Netzteils wird verstanden, dass ein Netzteil beispielsweise elektrisch, optisch, elektromechanisch oder auf andere Weise gesteuert werden, d.h. in verschiedene Schaltzustände versetzt werden kann. Dies umfasst das Ein- und Ausschalten des Netzteils, kann jedoch auch das Umschalten des Netzteils in dazwischenliegende Betriebsstufen umfassen. Der Steuerausgang muss geeignet sein, eine solche Steuerung anzusprechen. Bei elektrischer Ansteuerung muss der Ausgang so ausgelegt werden, dass der Ausgang den für die Steuerung erforderlichen Strom liefern kann, beispielsweise zur Schaltung eines Optokopplers oder Relais. Hier kann - zur Optimierung des Stromverbrauchs - auch eine Pulsansteuerung vorgesehen sein.

Im Ruhezustand eines elektrischen Geräts ist dessen Aufwachschaltung aktiv. Die Schaltung sollte zweckmäßig so ausgelegt sein, dass sie in diesem Betriebszustand möglichst wenig Energie verbraucht. Der Signaleingang bzw. die Signaleingänge sind - zumindest in periodischen Abfrageintervallen - aktiv und mit der Steuereinheit verbunden. Liegt an einem der Signaleingänge ein Signal an, das ein Aufwachereignis darstellt, leitete die Steuereinheit die Aufwachprozedur ein. Als Aufwachereignisse kommen beispielsweise bei einem Tastereingang das Betätigen des Tasters, bei einem Nutzsignaleingang das Auftreten eines Nutzsignals (beispielsweise das Anliegen eines Videosignals am A/V-Eingang eines Fernsehers, detektiert, im einfachsten Falle, durch einen Komparator) oder bei einem Fernsteuer-Eingang eine Befehlssequenz von Fernsteuer-Signalen in Frage, die das Gerät einschalten sollen. Als weiteres Beispiel eines durch ein Nutzsignal definierten Aufwachereignisses dient das VPS-Signal bei einem Videorecorder. Da hierfür allerdings eine reine Schwellenwertdetektion nicht ausreicht, ist eine entsprechend komplexe Decodierungs-Schaltung (Empfangsschaltung) notwendig. Diese kann für eine Optimierung des Stromverbrauchs beispielsweise erst einige Zeit vor dem programmierten Aufnahmezeitpunkt aktiviert werden.

Die Aufwachprozedur kann hierbei je nach Aufwachereignis unterschiedlich sein. Im einfachsten Fall aktiviert die Steuereinheit den Steuerausgang und schaltet so das Netzteil ein, so dass das Gerät in den Betriebszustand übergeht.

Eine Sonderrolle kann hierbei der Fernsteuer-Eingang einnehmen. Während beispielsweise ein "Ein"-Taster-Signal oder ein auftretender Nutzsignalpegel lediglich zum Einschalten des Geräts führen, verhält sich die Situation bei Fernsteuer-Signalen komplizierter. Hier ist einerseits das Signal und die notwendige Bearbeitung bereits deutlich komplexer. Es handelt sich z.B. bei Funk- oder Infrarot-Fernsteuerungen um Signale, die ggf. verstärkt, demoduliert, gefiltert und zur Verarbeitung bevorzugt digitalisiert werden müssen. Andererseits muss auch nicht das reine Vorhandensein eines Signals bereits ein Aufwachereignis darstellen. Sondern es kann notwendig sein zunächst festzustellen, ob ein Fernsteuersignal überhaupt für das Gerät (und nicht für ein anderes Gerät) bestimmt ist. Zudem muss einerseits überprüft werden, ob empfangene Fernsteuer-Signale überhaupt ein "Aufwachen" des Geräts bewirken sollen. Schließlich ist auch die vom Benutzer gewünschte und mit dem Fernsteuersignal ausgelöste Reaktion des Geräts nicht stets gleich Sondern ein Benutzer kann beispielsweise einen Fernseher direkt mit einem vorgewählten Programm (Empfangskanal) starten, indem er die entsprechende Zifferntaste drückt.

Für die Verarbeitung von Fernsteuer-Signalen durch die Aufwachschaltung werden grundsätzlich die Möglichkeiten der vollständigen Analyse, der minimalen Analyse und der mehrstufigen Analyse vorgeschlagen, wobei je nach Anwendung zu entscheiden sein wird, welche Form der Analyse der Fernsteuersignale jeweils sinnvoll ist.

Bei einer vollständigen Analyse werden die empfangenen Fernsteuer-Signale komplett durch die Aufwachschaltung analysiert, d.h. es werden die durch das Fernsteuersignal repräsentierten Codes ermittelt und mit gespeicherten Aufwach-Signalen, d.h. Befehlssequenzen, die ein Aufwachereignis auslösen sollen, verglichen. Solche Aufwach-Signale können in der Aufwachschaltung vorgespeichert sein. Es wird aber bevorzugt, dass die Signale, die ein Aufwachereignis darstellen sollen, in der Aufwachschaltung frei programmierbar, d.h. abspeicherbar sind.

Bei einer minimalen Analyse wird in der Aufwachschaltung ein Aufwachereignis bereits dadurch definiert, dass überhaupt Aktivität am Fernsteuer-Eingang (z.B. Infrarot-Empfangsdiode, Ultraschall- oder Funkempfänger, etc.) festgestellt wird. Bei einer Infrarot-Fernsteuerung ist dies auch bereits in einem photovoltaischen Betriebszustand der Infrarot-Diode möglich. Sobald irgendeine Form eines Infrarot-Signals auftritt, wird ein Aufwachereignis ausgelöst, bei dem das elektrische Gerät in einen Betriebszustand versetzt wird, in dem die Geräte-Steuereinheit (Mikrocontroller) aktiviert ist, die dann das Signal vollständig dekodiert.

Bei einer mehrstufigen Analyse wird durch die Aufwachschaltung in einer ersten Stufe festgestellt, ob überhaupt Aktivität am Fernsteuerempfangsteil (z.B. Infrarot Eingang) vorhanden ist. Ist dies der Fall wird in einer zweiten Stufe eine vollständige Analyse durch die Aufwachschaltung initiiert. Dies hat den Vorteil, dass volle Funktionalität (mit geringer Zeitverzögerung) bei sehr geringem Stromverbrauch möglich ist. Unnötige Aufwachereignisse (wenn beispielsweise keiner der vorgegebenen Aufwachcodes vorliegt) können so vermieden werden.

Es kann vorgesehen sein, dass die empfangenen Befehlssequenzen, die das Aufwachereignis ausgelöst haben, zunächst in der Aufwachschaltung zwischengespeichert werden und von dem dann "aufwachenden" Mikrocontroller des Geräts von dort ausgelesen werden, so dass die gesendeten Signale nicht "verloren" gehen, sondern ausgeführt werden. Besonders bevorzugt wird, dass auch im Betriebszustand des Geräts die Fernsteuersignale zunächst zur Aufwachschaltung gelangen und dort von der Steuereinheit des Geräts ausgelesen werden. So ist kein zweiter Fernsteuer-Signalempfänger notwendig
Gemäß einer Weiterbildung ist als weiterer Signalgeber-Eingang ein digitaler Dateneingang vorgesehen. Dieser ist an beliebige digitale Inferfaces anschließbar, darunter genormte serielle oder parallele Schnittstellen, Bus-Systeme etc. Insbesondere kann auch eine Computer-Schnittstelle, zB. ein Ethernet-Netzwerk so auf definierte Aufwachereignisse überwacht werden. Dies ist insbesondere auch für den Anschluss an das Internet nutzbar.

Die Aufwachschaltung enthält bevorzugt einen Speicher, der beispielsweise als statisches RAM ausgeführt sein kann. Bei diesem Typ von Speicher bleiben gespeicherte Daten erhalten, wobei hierfür nur ein äußerst geringer Strom benötigt wird. Die Größe des Speichers ist so auszulegen, dass sie ausreichend ist für die Speicherung von Betriebsparametern (Schaltverhalten, Empfindlichkeit des analogen Eingangs etc.), empfangene Fernsteuerungs-Codes, gespeicherte Aufwach-Codes und Uhr- bzw. Zeitschaltuhr-Register.

Nach einer Weiterbildung der Erfindung ist in der Aufwachschaltung auch eine Uhr vorgesehen. Dieser Begriff wird hier ebenfalls funktionell für jede Form eines Zeitgebers oder kontinuierlichen Zählers verendet, d.h. unter einer Uhr wird auch ein einfaches Zählregister mit automatischer Inkrementierung verstanden. Ein Taktgeber kann in der Aufwachschaltung vorgesehen sein. Es ist hierbei bevorzugt, mindestens das taktbestimmende Bauteil (zB. Quarz) oder auch einen vollständigen Taktgeber (Oszillator) extern anzuordnen. Eingänge für den Anschluss eines frequenzbestimmenden Bauteils und Eingänge für einen extern erzeugten Takt werden zusammenfassend als "Takt-Eingänge" bezeichnet. Als Taktgeber kommt auch eine Einheit in Frage, die den Takt aus der Netzfrequenz ableitet.

Wenn eine Uhr vorhanden ist, kann die Steuereinheit eine Zeitschalt-Funktion ausführen, bei der zu einem eingestellten Aufwachzeitpunkt (bzw. Zählerstand) die Aufwachprozedur eingeleitet wird. Vorteilhafterweise kann die Uhr der Aufwachschaltung als Echtzeituhr des gesamten Geräts dienen, wobei bevorzugt bei jedem Einschalten die Geräte-Steuereinheit die Uhr ausliest. Bei der Ausrührung als Zählregister kann der Zählerstand dann in Zeiteinheiten (Jahr, Monat, Tag Stunde, Minute, Sekunde) übersetzt werden. So kann eine separate Echtzeituhr eingespart werden.

Für die Kommunikation der Aufwachschaltung mit dem Gerät, beispielsweise mit dem Mikrocontroller des Geräts in dem die Aufwachschaltung enthalten ist, ist gemäß einer Weiterbildung der Erfindung ein Kommunikationsanschluss vorgesehen. Hierbei kann es sich um jede dem Fachmann bekannte Form der Datenübertragung handeln. Bevorzugt werden digitale Übermittlungsverfahren, beispielsweise serielle oder parallele Schnittstellen sowie Bussysteme. Hierbei wird der I²C-Bus als besonders einfache und bei geringen Kosten zu realisierende Standard-Verbindung zwischen integrierten Schaltungen bevorzugt. Über einen solchen Kommunikationsanschluss kann einerseits die Steuereinheit programmiert werden, so dass Aufwachereignisse definiert werden (beispielsweise, wenn die Steuereinheit bei einem Taster-Signal, aber nicht bei einem auftretenden Nutzsignal die Aufwachprozedur initiieren soll). Es können auch direkte Transfers in den Speicher erfolgen, beispielsweise von Befehlssequenzen einer Fernsteuerung, bei denen die Aufwachprozedur initiiert werden soll. Bei einem Kommunikationsanschluss, der auch das Versenden von Daten ermöglicht, kann über den Kommunikationsanschluss auch eine beim Einschalten empfangene Fernsteuerungs-Befehlssequenz ausgelesen werden, die im Speicher abgespeichert wurde (sowie ggf. alle weiteren nach dem Einschalten empfangenen Codes).

Im Stand der Technik umfassten Aufwachschaltungen häufig die gesamte Steuerelektronik des Geräts, d.h. es gab keine dedizierte Aufwachschaltung, sondern die Steuerelektronik blieb - inklusive Mikrocontroller - im Standby-Betrieb aktiv. Gemäß einer Weiterbildung der Erfindung ist nun vorgesehen, eine separate Aufwachschaltung vorzusehen. Diese wird bevorzugt als eine integrierte Schaltung d.h. als ein "Chip", ausgeführt.

Dabei können Standard-Bauformen mit beispielsweise 8 oder 14 Anschlüssen verwendet werden. Hierdurch können sehr geringe Herstellungskosten und auch ein geringer Stromverbrauch erreicht werden. Bevorzugt kommen stromsparende, bekannte Chip-Technologien, beispielsweise CMOS, zum Einsatz

Die Aufwachschaltung ist bevorzugt so ausgelegt, dass im Ruhezustand möglichst wenig elektrische Energie verbraucht wird. Dies umfasst einen energiesparenden Schaltungsentwurf (bei dem im Leerlauf, d.h. solange keine Signale anliegen, der Stromverbrauch minimal ist) und bevorzugt auch ein intelligentes Power-Management, bei dem jeweils nicht benötigte Komponenten der Schaltung abgeschaltet werden. Als weitere Sparmaßnahme wird die Überwachung der Eingänge im Burst-Betrieb, d.h. nur periodisch, vorgeschlagen.

Ein erfindungsgemäßes Gerät lässt sich in einen Ruhezustand und einen Betriebszustand schalten, wobei im Ruhezustand das Netzteil abgeschaltet ist, aber eine Aufwachschaltung aktiv bleibt. Ein solches Gerät weist außer dem Netzteil eine Anzahl von Funktionseinheiten auf. Unter diesem funktionellen Begriff wird jede zur Funktion eines elektrischen Geräts beitragende Einheit verstanden. Beispielsweise umfasst dies die Elektronik und die Bildröhre eines Fernsehers, das Laufwerk und die Ansteuerelektronik sowie den Empfangsteil eines Videorecorders usw.. Unter einer Funktionseinheit werden alle elektrischen Komponenten von bekannten elektrischen Geräten verstanden bis auf das Netzteil, das den Anschluss an eine Stromversorgung ermöglicht und die Funktionseinheiten mit elektrischer Energie versorgt.

Damit die Aufwachschaltung aktiv bleiben kann, wenn das Netzteil abgeschaltet ist, benötigt sie eine separate Energieversorgung. Hierbei kann es sich beispielsweise um eine einfache primärseitige Stromversorgung handeln, d.h. eine Stromversorgungseinheit, die bevorzugt direkt, d.h. ohne Transformator mit dem Stromversorgungsnetz gekoppelt ist. Mit einem Vorwiderstand oder über eine Kapazität können die geringen notwendigen Betriebsströme so direkt dem Strom-Versorgungsnetz entnommen werden. Alternativ kann auch ein Energiespeicher zur Versorgung der Aufwachschaltung mit elektrischer Energie vorgesehen sein. Hierbei kann es sich um eine (bevorzugt austauschbare) Batterie handeln. Unter Einsatz heute verwendeter Halbleiter-Technologie für die Aufwachschaltung würde eine solche Batterie leicht 2 bis 5 Jahre lang die erforderliche elektrische Energie für die Aufwachschaltung bereitstellen.

Besonders bevorzugt wird allerdings ein wiederaufladbarer Energiespeicher. Hierbei kann es sich beispielsweise um einen Akkumulator oder einen Kondensator ausreichender Kapazität handeln. Je nach Ausführung kann dies ein Standard-(z.B. Elektrolyt)-Kondensator oder ein spezieller Hochkapazitäts-Kondensator einer Kapazität von üblicherweise 0,047 F oder mehr sein.
Für wiederaufladbare Elemente ist vorteilhafterweise eine Ladevorrichtung vorgesehen. Diese kann externe Energiequellen, beispielsweise Solarzellen, verwenden. Üblicherweise wird sie jedoch vor allem von dem Netzteil des Geräts mit elektrischer Energie versorgt, wenn dieses (im Betriebszustand des Geräts) aktiv ist.

Hierbei gibt es verschiedene Möglichkeiten sicherzustellen, dass bei einem längeren Verbleiben des Geräts im Ruhezustand die Stromversorgung der Aufwachschaltung weiterhin gewährleistet ist. Einerseits kann der Energiespeicher überwacht werden, wobei beispielsweise die davon gelieferte Spannung mit einer Mindestschwelle verglichen wird Bei einem Unterschreiten eines Mindeststands des Energiespeichers wird der Energiespeicher aufgeladen, vorzugsweise indem das Netzteil eingeschaltet wird, so dass es für eine gewisse Zeit die zum Laden notwendige Spannung zur Verfügung stellt (Ladezyklus). Hierbei wird bevorzugt, dass beim Einschalten des Netzteils nicht das gesamte Gerät in Betrieb genommen wird, sondern dass die Funktionseinheiten ausgeschaltet bleiben und lediglich das Netzteil zur Versorgung der Ladeschaltung aktiv wird (Einschaltmaskierung).

Alternativ oder in Kombination hiermit kann auch eine Ladestrategie verfolgt werden, bei der in jeweils vorher programmierten Abständen das Netzteil zum Laden des Energiespeichers kurz eingeschaltet wird (feste Ladezyklen). Eine solche Strategie kann über die in der Aufwachschaltung vorgesehene Zeitschaltuhr-Funktion realisiert werden, wobei beim Ausschalten des Geräts ein Zeitraum - beispielsweise ca. 5 Minuten bei einem 1000 µF-Kondensator als Energiespeicher oder mehrere Wochen bei einem 100 mAh-Akkumulator - vorprogrammiert wird, nach dessen Ablauf das Netzteil wieder eingeschaltet wird Auch hier wird bevorzugt, dass nur das Netzteil und nicht die Funktionseinheit des Geräts eingeschaltet werden.

Bei einer erfindungsgemäßen Netzteilbaugruppe ist eine Aufwachschaltung in einem Netzteil-Modul integriert. Diese Netzteilbaugruppe kann dann insgesamt als "intelligentes" Netzteil in herkömmlichen Geräten eingesetzt werden, wobei das Netzteil selbst eine "Standby"-Funktion aufweist.

Nachfolgend werden Ausführungsformen der Erfindung anhand von Zeichnungen näher beschrieben. In den Zeichnungen zeigen:
- Fig. 1: ein schematisches Diagramm einer ersten Ausführungsform einer Aufwachschaltung;
- Fig. 2: ein Blockdiagramm der Komponenten eines elektrischen Geräts mit einer Aufwachschaltung;
- Fig 3: ein schematisches Diagramm einer ersten Ausführungsform eines elektrischen Geräts mit einer Aufwachschaltung;
- Fig 4: ein schematisches Diagramm einer zweiten Ausführungsform eines elektrischen Geräts mit einer Aufwachschaltung;
- Fig 5: ein schematisches Diagramm einer dritten Ausführungsform eines elektrischen Geräts mit einer Aufwachschaltung;
- Fig 6: ein schematisches Diagramm einer zweiten Ausführungsform einer Aufwachschaltung;
- Fig 7: ein schematisches Diagramm einer dritten Ausführungsform einer Aufwachschaltung;
- Fig 8: ein schematisches Diagramm einer vierten Ausführungsform eines elektrischen Geräts mit einer Netzteilbaugruppe.

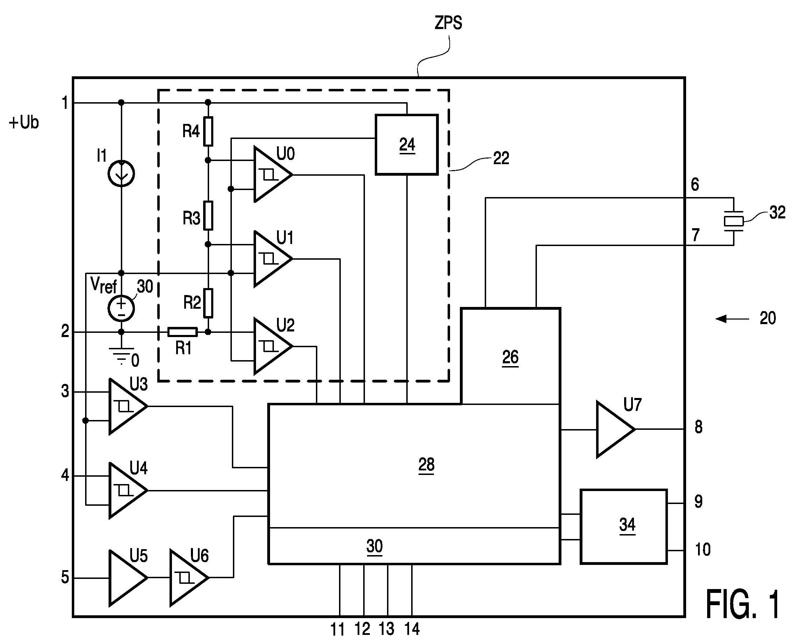

In Figur 1 ist ein Schaltmodul ZPS mit einer Aufwachschaltung 20 dargestellt. Das Schaltmodul ZPS hat vierzehn externe Anschlüsse 1 bis 14. Die Aufwachschaltung weist eine Spannungsversorgungs-Baugruppe 22 mit einem linearen Spannungsregler 24 auf. Ferner ist eine Uhr 26, eine Steuereinheit 28 und ein Speicher 30 vorgesehen.

Die Anschlüsse 1 und 2 des Moduls ZPS dienen zur Spannungsversorgung. Die Spannungsversorgungs-Baugruppe 22 weist hierbei einen linearen Spannungsregler 24 auf, dem als Referenz die konstante Spannung Vref zugeführt wird und der eine konstante, linear geregelte Versorgungsspannung für die Steuereinheit 28 und (nicht dargestellt) ggf. die übrigen Komponenten bereitstellt. So kann das Schaltmodul in einem breiten Bereich von Eingangsspannungen von etwa 2 ...15V betrieben werden. Die Spannungsversorgungs-Baugruppe 22 weist hierbei einen aus Widerständen R1, R2, R3 und R4 gebildeten Spannungsteiler auf, wobei das Spannungsniveau jeder Stufe des Spannungsteilers mit einem von drei Komparatoren U0, U1 und U2 verbunden ist. Diese Komparatoren U0, U1, U2 vergleichen den jeweils heruntergeteilten Anteil mit dem festen Referenzniveau Vref.

Beispielsweise kann die Referenzspannung, wie dargestellt, durch eine Stromquelle I1 und eine Zenerdiode 30 geliefert werden. So bleibt Vref unabhängig von der Eingangsspannung, bei gleichbleibend niedrigem Stromverbrauch.

Das jeweilige Ausgangssignal der Komparatoren U0, U1, U2 wird der Steuereinheit 28 zugeführt. Zusammengenommen liefern die drei digitalen Signale eine Information über den Spannungspegel + Ub am Eingang 1. Sind beispielsweise die Komparatorsignale U0 und U1 gleich 0 (d.h. die einfach und auch die zweifach heruntergeteilte Versorgungsspannung sind kleiner als die Referenzspannung), jedoch das dritte Komparatorsignal U2 noch gleich 1 (d.h. die dreifach heruntergeteilte Eingangsspannung ist noch größer als die Referenzspannung), so liefert dies insgesamt für die Steuereinheit 28 die Information, dass die Versorgungsspannung zwar schon stark abgesunken ist, jedoch noch oberhalb eines Minimalpegels liegt.

In der nachfolgenden Tabelle wird beispielhaft angegeben, in welcher Weise die Signale U0, U1, U2 zusammen angewendet werden können. Die Steuereinheit führt jeweils in Abhängigkeit von dem gelieferten Wert die notwendige Aktion aus.

| | U0 | U1 | U2 | Bedeutung |
|---|---|---|---|---|
| U= Uₘₐₓ =5V | 1 | 1 | 1 | Spannungsmaximum erreicht, bei Ladebetrieb Netzteil abschalten |
| | | | | |
| U ≈ 2V ...5V | 1 | 1 | 0 | Normaler Betriebsbereich, keine Aktion nötig |
| | | | | |
| U=Uₘᵢₙ₁ ≈ 2V | 1 | 0 | 0 | Minimale Betriebsspannung erreicht, Netzteil einschalten um Energiespeicher nachzuladen |
| | | | | |
| U=Uₘᵢₙ₂ ≈1,5V | 0 | 0 | 0 | Spannungsausfall, Informationen und Funktion des Chips ungültig |

Das Schaltmodul ZPS ist als herkömmliche integrierte CMOS- Halbleiter-Schaltung aufgebaut. Beim Design der Schaltung wird darauf geachtet, dass der Stromverbrauch möglichst gering ist. Das hier als Beispiel vorgestellte CMOS-Modul ZPS arbeitet in einem Eingangsspannungsbereich von 2 bis 5 V. Der durchschnittliche Stromverbrauch dieses Ausführungsbeispiels liegt unter 2 mA, besonders bevorzugt bei weniger als 200 µA.

Die Eingänge 6 und 7 des Schaltmoduls ZPS sind Takt-Eingänge für den Uhr-Takt, hier geliefert durch einen Oszillator, dessen aktive Elektronik in der Uhr 26 integriert ist und der mit einem externen Quarz 32 verbunden ist. Die Uhr 26 ist ein 32-Bit Zählregister, wobei bei jedem (durch einen nicht dargestellten Teiler heruntergeteilten) Taktsignal an den Eingängen 6, 7 das Zählregister inkrementiert wird. Dieses Zählregister 26 ist mit der Steuereinheit 28 verbunden, so dass es von dort ausgelesen werden kann. Der Zählerstand kann durch Umrechnung in Jahr, Monat, Tag, Stunde, Minute und Sekunde übersetzt werden.

Der Ausgang 8 des Schaltmoduls ZPS dient zur Ansteuerung des Netzteils. Die Steuereinheit 28 steuert einen Ausgangstreiber U7 an, durch den ein weiter Bereich von Strömen (1 mAbis 200 mA) zumindest jeweils kurzzeitig aus dem Ausgang 8 geliefert werden können. Hierzu kann - je nach Einsatz des Schaltmoduls ZPS - ein Optokoppler eines Netzteils, ein Relais oder ein direkter SMPS-Steuereingang zum Ein-/Ausschalten eines Netzteils verwendet werden.

Ein Bustreiber-Baustein 34 ist mit dem Speicher 30 und mit der Steuereinheit 28 verbunden. Der Bustreiber-Baustein 34 wird über die Ein-/Ausgänge 9 und 10 angesteuert. Es handelt sich um einen bekannten Bustreiber-Baustein für den I²C-Bus. Über den I²C-Bus können nach dem Protokoll hierfür, das dem Fachmann bekannt ist, Daten von und zum Speicher 30 bzw. von und zu der Steuereinheit 28 übertragen werden.

Das Schaltmodul ZPS weist die Signaleingänge 3, 4 und 5 auf. Eingang 3 ist hierbei ein Taster-Eingang. An diesen Eingang kann direkt ein Ein/Aus-Taster angeschlossen werden. Beim Betätigen des Tasters wird der hierdurch ausgelöste Spannungsimpuls durch einen Komparator U3 mit der Referenzspannung Vref verglichen. Das Vergleichsergebnis wird der Steuereinheit 28 zugeführt. Während in einer alternativen Ausführungsform dem Taster-Eingang eine bistabile Kippstufe (Flip-Flop) nachgeschaltet ist, wird diese Funktion in der vorliegenden Ausführungsform direkt von der Steuereinheit 28 übernommen.

Der Eingang 4 ist ein Nutzsignal-Eingang für das Nutzsignal des elektrischen Geräts, in dem das Schaltmodul ZPS verwendet wird. Bei einem Fernseher kann es sich hierbei beispielsweise um den SCART (A/V)-Eingang handeln, bei einem Computerbildschirm um das VGA (Sync.)-Signal, bei einem Audioverstärker um ein Musiksignal, bei einem Videorecorder um ein SCART-Signal, bei Telekommunikationsgeräten um ein Signal, das einen Anruf signalisiert und bei Computerperipheriegeräten um ein Signal auf dem jeweiligen Bus-Anschluss. Dieses Signal wird verstärkt und durch den Komparator U4 mit der Spannung Vref verglichen, wobei wiederum die Steuereinheit 28 das Vergleichsergebnis auswertet.

Der Eingang 5 ist ein Fernsteuer-Eingang, der für den direkten Anschluss einer Infrarot-Empfängerdiode oder eines Infrarot-Empfangsmoduls ausgelegt ist. Eine Infrarot-Empfängerdiode liefert ein Analogsignal von sehr niedrigem Pegel, das durch einen Verstärker U5 (mit automatischer Verstärkungsregelung) verstärkt und von einem Filter (nicht dargestellt) bandpassgefiltert wird. Der A/D-Wandler U6 wandelt das Signal dann in ein digitales Signal um, das von der Steuereinheit 28 verarbeitet wird.

Infrarot-Empfangsmodule liefern direkt ein digitales Signal, so dass dann U5 und U6 entfallen können.

Das Signal am Eingang 5 wird der Steuereinheit 28 zugeführt. Diese ist in der Lage, die empfangenen digitalen Infrarotsignale zu decodieren, d.h. Befehlssequenzen zuzuordnen. In diesem Fall sind im Speicher 30 solche Sequenzen abgespeichert, die die Aufwachprozedur auslösen sollen. Die Steuereinheit 28 vergleicht die empfangenen Sequenzen mit den im Speicher 30 abgespeicherten Sequenzen. Bei ausreichender Übereinstimmung der Sequenzen wird die Aufwachprozedur initiiert (siehe unten). Dabei werden diese und weiter eintreffende Befehlssequenzen von der Steuereinheit 28 im Speicher 30 abgelegt, so dass sie später - nach "Aufwachen" des Mikrocontrollers des Geräts - über den I²C -Bus abgerufen werden können.

Das Schaltmodul ZPS weist weiterhin die Eingänge 11 bis 14 auf, die als Programmier-Pins vorgesehen sind. Durch entsprechende Beschaltung der Pins können verschiedene, in angesteuert werden. Dies kann alternativ zum I²C -Bus an den Eingängen 9 und 10 vorgesehen sein. So kann das Schaltmodul ZPS zB. mit Steckerbrücken für bestimmte Betriebsmodi programmiert werden. Insgesamt sind an den vier Programmier-Pins 11 bis 14 sechzehn verschiedene Binär-Kombinationen ansteuerbar, bei der Ausrührung als Tristate-Eingang sind 81 Kombinationen möglich.

Nachstehend sind in Form einer Tabelle Beispiele für solche Programmierungen (d.h. Auswahl der Modi) ausgeführt:

| | | |
|---|---|---|
| 0. | 0000 | Standardmodus, Programmierung mit I C Schnittstelle |
| 1. | 0001 | Standard TV, Aufwachprozedur bei Taster IR Code für Fernsehgeräte |
| ... | | |
| 10. | 1010 | Computermonitor, Aufwachprozedur bei Taster oder Signal an Analogeingang |
| 11. | 1011 | ... |

So kann dasselbe Schaltmodul ZPS in verschiedene Geräte eingebaut werden, wobei je nach Geräte die Programmier-Pins 11-14 entsprechend gesetzt werden (z.B., 1010 für den Einbau in einen Computermonitor).

Die Steuereinheit 28 verknüpft die ihr zugeführten verschiedenen Signale in geeigneter Weise, um bei einem definierten Aufwachereignis den Ausgang 8 zu aktivieren. Bei der Steuereinheit 28 handelt es sich um eine programmierbare Logik. In einer alternativen Ausführung (nicht dargestellt) handelt es sich bei der Steuereinheit um einen einfachen Mikrokontroller, der den Oszillator der Uhr als Takt verwendet. Die Programmierung erfolgt hierbei über das I²C Interface 34. Je nach Programmierung kann die Steuereinheit 26 die folgenden Funktionen ausführen:
- Auslösen eines Aufwachereignisses bei entsprechendem Ausgangssignal der Elemente U3, U4 oder U6 (Signaleingänge)
- Auslösen eines Aufwachereignisses bei Übereinstimmung des Werts für die Uhr 26 mit einem im Speicher 30 abgelegten Aufwachzeitpunkt (SchaltuhrFunktion)
- Auslösen eines Aufwachereignisses bei einem durch die Komparatoren U0, U1 und U2 gelieferten digitalen Wert, der die nahe Erschöpfung der Energieversorgung anzeigt (Ladezyklus).

Die Steuereinheit 28 betreibt hierbei ein intelligentes "Power Management", durch das in einem jeweiligen Betriebszustand bzw. bei einer entsprechenden Programmierung jeweils nicht benötigte Komponenten der Aufwachschaltung ZPS ausgeschaltet werden. Dies betrifft beispielsweise den Ausgangstreiber U7, die den Signaleingängen 3, 4, 5 nachgeschaltete Elektronik oder das I²C Interface 34.

In einer alternativen Ausführung erfolgt die Abfrage der Eingänge 3, 4, 5 jeweils im Burst-Modus mit voreingestellten Intervallen. Diese Intervalle sind von der Art des Eingangs abhängig. Ein Taster sollte alle 10-500 ms abgefragt werden, bei einem Nutzsignaleingang sind Abfrageintervalle von bis zu 5 s ohne deutliche Komforteinbußen möglich. Bevorzugt werden Abfragen alle 100 ms für einen Taster und 1 s bei einem Nutzsignaleingang. So müssen die jeweiligen Elemente, die, wie beispielsweise der Verstärker U5 maßgeblich zum Gesamtenergieverbrauch beitragen, nicht ständig eingeschaltet sein, sondern werden periodisch nur kurzzeitig aktiviert.

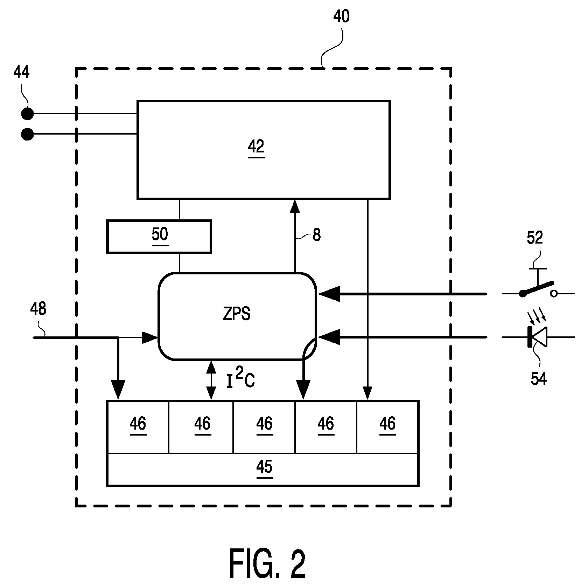

In Fig 2 ist in einem Blockdiagramm ein elektrisches Gerät 40 dargestellt. Hierbei kann es sich beispielsweise um einen Fernseher, einen Videorecorder oder ein anderes elektrisches Gerät handeln. Das Gerät 40 weist ein Netzteil 42 zur Stromversorgung auf, das mit Anschlüssen 44 an das Stromversorgungsnetz angeschlossen ist. Weiter weist das Gerät 40 eine Geräte-Steuereinheit 45 (beispielsweise die Mikrocontroller-Steuerung eines Fernsehers) und Funktionseinheiten 46 auf (beispielsweise bei einem Fernseher die Bildröhre und der Empfangsteil). Die Funktionseinheiten 46 und die Geräte-Steuereinheit werden vom Netzteil 42 mit elektrischer Energie versorgt. Über einen Nutzsignaleingang 48 gelangt ein Nutzsignal (z.B. ein Videosignal am SCART-Eingang bei einem Fernseher) zu den Funktionseinheiten 46.

Das Gerät 40 ist mit einem Schaltmodul ZPS ausgestattet. Es handelt sich um eine separate Schaltung Das Schaltmodul wird durch ein Energie-Pufferelement 50 mit elektrischer Energie versorgt. Über den Ausgang 8 kann es das Netzteil 42 ein- und ausschalten.

Das elektrische Gerät 40 weist als Beispiel für externe Eingabeelemente einen Ein-/Aus-Taster 52 und eine Infrarot-Empfangsdiode 54 auf. Diese sind an Signaleingänge des Schaltmoduls ZPS angeschlossen. Das Schaltmodul ZPS steht über einen I²C -Bus mit den Funktionseinheiten 46 des Geräts in Kommunikationsverbindung.
Das elektrische Gerät 40 ist zwischen einem Betriebszustand und einem Ruhezustand umschaltbar. Im Betriebszustand ist das Netzteil 42 eingeschaltet und versorgt die Funktionseinheiten 46 und die Geräte-Steuereinheit 45 mit elektrischer Energie. Gleichzeitig wird auch das Pufferelement 40 mit elektrischer Energie versorgt, so dass sich dieser Energiespeicher auflädt. Im Betriebszustand des Geräts 40 sind die Funktionseinheiten 46 aktiv. Beispielsweise bei einem Fernseher ist sowohl die Bildröhre als auch das Empfangsteil eingeschaltet. Ein Nutzsignal (zB. Antennensignal) 48 wird den Funktionseinheiten 46 zugeführt und dort entsprechend verarbeitet (z.B. erkannt, demoduliert, dargestellt, aufgezeichnet etc.). Im Betriebsmodus ist das Gerät 40 über eine Infrarot-Fernsteuerung (nicht dargestellt) fernsteuerbar. Die Signale der Infrarot-Fernsteuerung werden von der Infrarot-Empfangsdiode 54 aufgefangen und über den entsprechenden Signaleingang an das Schaltmodul ZPS geleitet, das die entsprechenden Signale über den I²C -Bus an die hierfür vorgesehene Funktionseinheit 46 weiterleitet. Alternativ kann auch vorgesehen sein, dass für die Funktionseinheiten 46 ein separater Empfänger für Fernsteuer-Signale vorgesehen ist, so dass die Signale nicht über das Schaltmodul ZPS geleitet werden müssen.

Das Gerät 40 kann aus dem Betriebszustand in einen Ruhezustand umgeschaltet werden. Dies kann durch entsprechende äußere Befehlseingabe (z B. Betätigung des "Aus"-Tasters 52 oder entsprechendes Fernsteuer-Kommando) bewirkt werden. Der Abschaltvorgang kann jedoch auch von der Geräte-Steuereinheit 45 bewirkt werden, beispielsweise wenn das Nutzsignal 48 für einen vorbestimmten Zeitraum ausfällt.

Beim Abschalten programmiert die Geräte-Steuereinheit 45 das Schaltmodul ZPS so, dass die gewünschten Aufwachereignisse festgelegt werden. So kann beispielsweise ein in der Zukunft liegender Aufwachzeitpunkt an das Schaltmodul ZPS übertragen werden, zu dem dieses nach Art einer Schaltuhr die Aufwachprozedur initiieren soll. Auch bezüglich der Signaleingänge des Schaltmoduls ZPS wird festgelegt, welche Ereignisse an den Signaleingängen Aufwachereignisse sein sollen. Bezüglich der Fernsteuer-Signale werden solche Befehlssequenzen an das Schaltmodul ZPS übertragen, die ein Aufwachen bewirken sollen. Dann wird das Netzteil 42 (direkt durch die Geräte-Steuereinheit 45 oder durch das Schaltmodul ZPS nach entsprechendem Befehl über den Kommunikationsanschluss I²C) ausgeschaltet. Das elektrische Gerät 40 befindet sich nun im Ruhemodus, in dem lediglich das durch das Pufferelement 50 gespeiste Schaltmodul ZPS noch aktiv ist. Die Funktionseinheiten 46 und die Geräte-Steuereinheit 45 sind vollständig ausgeschaltet, vom Netzteil 42 wird keine weitere Spannung geliefert. Am Netzanschluss 44 wird - im Idealfall auch durch das Netzteil- keine weitere elektrische Leistung entnommen. Wie später noch genauer erläutert wird, können aber auch bei ausgeschalteten Schaltnetzteilen noch Restverluste auftreten.

Das Schaltmodul ZPS überwacht nun während des Ruhezustands die Signaleingänge und die Uhr auf mögliche Aufwachereignisse. Aufwachereignisse können hierbei u.a. die folgenden sein:
- Betätigen des "Ein"-Tasters52
- Auftreten eines Nutzsignals 48
- Empfang einer Fernsteuer-Befehlsequenz, die in ausreichender Weise mit den gespeicherten "Aufwach"-Sequenzen übereinstimmt
- Erreichen des Aufwachzeitpunkts (Übereinstimmung des voreingestellten Zeitpunkts mit dem Stand der internen Uhr)
- Abfall der Versorgungsspannung am Pufferelement 50 unter einen definierten Minimalwert.

Je nach Anwendungsfall, insbesondere abhängig vom Typ des betrachteten elektrischen Geräts 40, können hierbei nur wenige oder auch nur eine einzige der obengenannten Funktionen zum Tragen kommen. Für weitere Anwendungen können auch je nach Bedarf weitere Aufwachereignisse definiert werden und hierfür weitere Eingänge vorgesehen werden.

Stellt das Schaltmodul ZPS im Ruhemodus ein Aufwachereignis fest, so steuert es über den Ausgang 8 das Netzteil 42 so an, dass dieses wieder eingeschaltet wird. Damit wird das elektrische Gerät 40 in den Betriebszustand versetzt, in dem die Funktionseinheiten 46 und die Geräte-Steuereinheit 45 vom Netzteil 42 mit Strom versorgt wird. Gleichzeitig wird auch das Pufferelement 50 wieder mit Energie aufgeladen.
In dem Fall, dass die Aufwachprozedur lediglich initiiert wurde um das Pufferelement 50 wieder aufzuladen, kann eine entsprechende Einschaltmaskierung verwendet werden, so dass die Funktionseinheit 46 und die Geräte-Steuereinheit 45 nicht eingeschaltet werden, sondern das Netzteil 42 lediglich das Pufferelement 50 mit Energie versorgt, bis dieses wieder ausreichend aufgeladen ist. Derartige Ladezyklen können entweder zeitgesteuert ablaufen (wobei jeweils beim Ausschalten eine Zeitspanne vorbestimmt wird, nach der ein weiterer Ladezyklus zu erfolgen hat) oder es kann die vom Pufferelement 50 gelieferte Spannung überwacht werden, so dass rechtzeitig vor Erschöpfung des Pufferelements 50 ein Ladezyklus aktiviert wird. Die im Zusammenhang mit der Aufwachschaltung ZPS erläuterte Spannungsversorgungs-Baugruppe 22 liefert ein entsprechendes Signal, das für diesen Zweck ausgewertet werden kann.

Wird die Aufwachprozedur aufgrund einer empfangenen Fernsteuer-Befehlsequenz initiiert, so liest die "aufwachende" Geräte-Steuereinheit 45 nach der Startverzögerung die empfangenen und in dem Schaltmodul ZPS zwischengespeicherten Fernsteuerkommandos aus und verarbeitet diese dann. So ist gewährleistet, dass auch die Signale, die erst das Aufwachen ausgelöst haben, von dem in den Betriebszustand umgeschalteten Gerät ausgeführt werden.

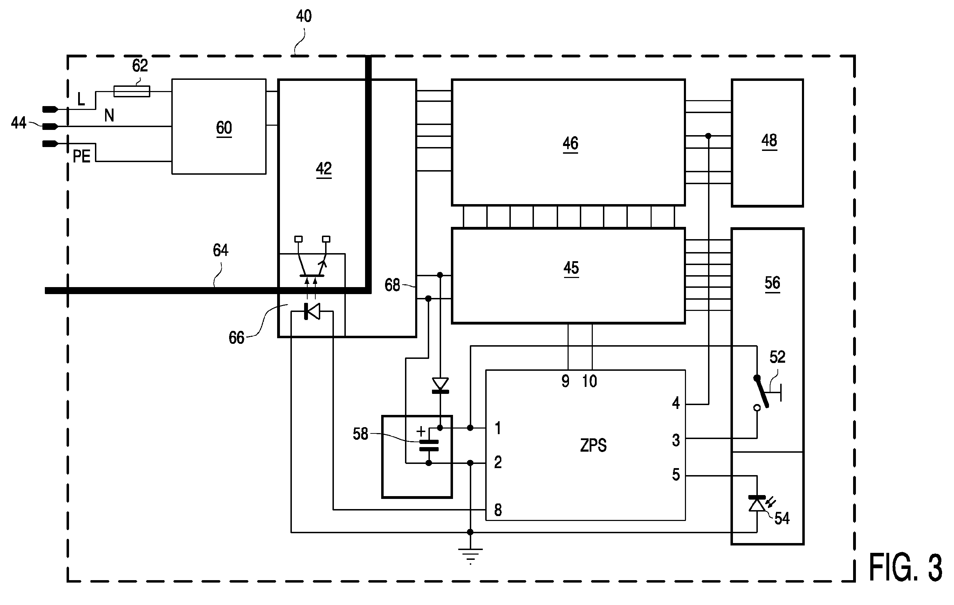

In Fig. 3 ist eine erste Ausführungsform eines elektrischen Geräts mit einer Aufwachschaltung in einem schematischen Diagramm dargestellt. Diese Ausführung ist besonders geeignet für Netzteile kleiner Leistung (bis ca. 25 W). Das elektrische Gerät 40 weist wiederum Funktionseinheiten 46 und eine Geräte-Steuereinheit 45 mit einem Mikrocontroller auf. Auf der Frontseite 56 des Geräts sind ein Taster 52 und eine Infrarot-Empfangsdiode 54 angeordnet. Ein Nutzsignal-Eingang 48 ist mit den Funktionseinheiten 46 und dem Schaltmodul ZPS verbunden. Ein 1000 µF Elektrolyt-Kondensator 58 dient als Energie-Pufferelement. Das elektrische Gerät 40 weist ein SMPS-Netzteil 42 (Standard Switch Power Supply, Schaltnetzteil) auf. Dies ist primärseitig über einen Netzfilter 60 und eine Sicherung 62 mit dem Netzanschluss 44 verbunden. Beim Netzteil 42 sind die Primär- und Sekundärseite der Norm entsprechend ausreichend getrennt. Die entsprechende Isolation ist durch die dicke Linie 64 angezeigt. Das SMPS-Netzteil 42 kann über einen Optokoppler 66 ein- bzw. ausgeschaltet werden. Ausreichende Isolation ist durch die optische Kopplung hierbei gewährleistet.
Die LED des Optokopplers 66 ist an den Ausgang 8 des Schaltmoduls ZPS angeschlossen. Hierüber schaltet das Schaltmodul ZPS das Netzteil 42 ein und aus. Schaltnetzteile weisen häufig integrierte Bausteine auf, mit denen der Betrieb des Netzteils (Erzeugung einer internen Wechselspannung) gesteuert wird. Einige dieser heute erhältlichen Bausteine weisen einen Anschluss für einen elektronischen Schalter auf. In anderen kann ein solcher Schalter mit geringem Aufwand hinzugefügt werden. Der Schalter sorgt hierbei dafür, dass die gesteuerten Halbleiter-Schalter, die aus der Eingangsspannung die interne Wechselspannung hoher Frequenz erzeugen, ausgeschaltet bleiben. Hierbei ist allerdings die Eingangsstufe auch bei ausgeschaltetem Netzteil unter Spannung, so dass ein - wenn auch geringer - Restverbrauch verbleibt.

Sekundärseitig speist das Netzteil 42 die Funktionseinheiten 46 des Geräts 40. Ein sekundärseitiger Ausgang 68 des Netzteils 42 speist hierbei die Geräte-Steuereinheit 45 mit einem darin enthaltenen Mikrocontroller. Über diesen Ausgang wird, wenn das Netzteil 42 eingeschaltet ist, auch - über eine Diode - das Kondensator-Pufferelement 58 geladen, das als Spannungsversorgung für das Schaltmodul ZPS dient. Das Schaltmodul ZPS ist über die Ausgänge 9 und 10 (I²C -Bus) mit der Geräte-Steuereinheit 45 verbunden. Über diese Verbindung kann das Verhalten des Schaltmoduls ZPS von der Geräte-Steuereinheit 45 programmiert werden und auch Signale - beispielsweise Fernsteuer-Codes vom Eingang 5 - an die Geräte-Steuereinheit 45 übermittelt werden.

Bei dieser ersten Ausführungsform ist das Pufferelement als Standard-Kondensator ausgeführt. Bei einem Kapazitätswert des Kondensators von 1000 µF kann die notwendige Versorgungsspannung für das Schaltmodul ZPS von 2 bis 5 V bei einem Strom von 10 µA für etwa fünf Minuten gewährleistet werden. Das Nachladen geschieht jedoch sehr schnell. Der Kondensator kann in weniger als einer Sekunde vollständig geladen werden. Bei dieser ersten Ausführungsform ist daher eine Steuerung des Nachladezyklus über die Überwachung der Versorgungsspannung vorgesehen. Über den Optokoppler 66 kann das Netzteil 42 ohne störendes Geräusch eingeschaltet werden. Auch das übrige Design des Netzteils ist darauf ausgelegt, dass der Einschaltvorgang keine deutlich wahrnehmbaren oder zumindest keine störenden Geräusche erzeugt, so dass die periodischen Ladezyklen nicht unangenehm auffallen. Bei einem solchen Ladezyklus, ausgelöst durch eine durch die Spannungsversorgungs-Baugruppe detektierte Unterschreitung eines Schwellenwerts der Eingangsspannung aktiviert das Schaltmodul ZPS das Netzteil 42, so dass über den Anschluss 68 das Pufferelement 58 aufgeladen wird. Gleichzeitig wird über die Anschlüsse 9 und 10 ein Signal bzw. ein Befehl, der eine Einschaltmaskierung aktiviert, an die Geräte-Steuereinheit 45 gesendet, so dass bei dieser kurzfristigen Aktivierung des Netzteils 42 die Geräte-Steuereinheit 45 nicht vollständig und die Funktionseinheit 46 überhaupt nicht eingeschaltet werden. Nimmt man bei fünfminütigen Ladezyklen von jeweils einer Sekunde einen Verbrauch von 5 W an, beträgt die mittlere Leistungsaufnahme im Ruhemodus insgesamt 0,017 W.

Alternativ kann auch für die Einschaltmaskierung eine Lösung gewählt werden, bei der das Einschalten des Netzteils nicht automatisch zum Einschalten der Geräte-Steuereinheit 45 (und der Funktionseinheit 46) führt, sondern dass hierzu erst ein spezieller "Aufwachbefehl", zB. über Kommunikationsanschlüsse 9, 10 nötig ist.

Alternativ kann auch ein Hochkapazitäts-Kondensator ("Super Cap", "Gold Cap") verwendet werden mit einer Kapazität von beispielsweise 0,1 F bei einer Maximalspannung von 5,5 V. Wenn das Schaltmodul ZPS einen Strom 10 µA bei einer Spannung von 2 bis 5 V benötigt, ist ein Ladezyklus etwa alle 8 Stunden notwendig. Nimmt man hier ein etwas größeres Netzteil mit 10 W Verbrauch und einer Ladezeit von 10 s an, erhält man eine durchschnittliche Leistungsaufnahme von 0,034 W.

In einem konkreten Anwendungsfall wird man je nach Art des elektrischen Geräts - und je nach Art des Netzteils - entscheiden, welches der genannten Elemente als Energie-Pufferelement und welche der bekannten Ladestrategien Verwendung finden. Alle hier genannten Arten von Puffer-Elementen können auch jeweils in Kombination verwendet werden. Als alternative Lösung kann auch eine Stromversorgung über eine mit einem Super Cap gepufferte Solarzelle vorgesehen sein. Auch hier sind allerdings Ladezyklen notwendig, wenn die Funktion des Geräts auch in dunkler Umgebung gewährleistet sein soll.

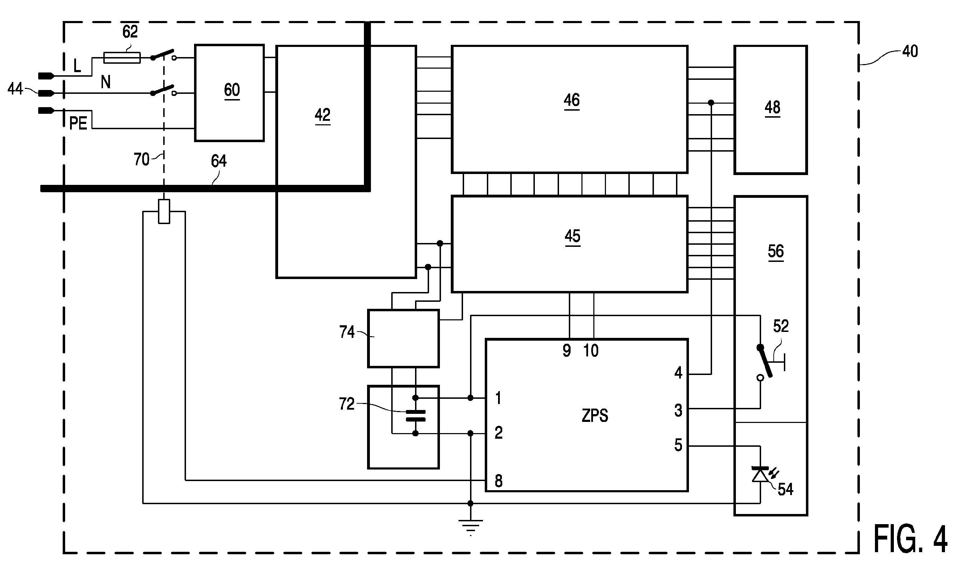

In Fig. 4 ist eine alternative Ausführungsform eines elektrischen Geräts 40 dargestellt. Diese stimmt bezüglich der meisten Komponenten mit der ersten Ausführungsform überein, so dass das dort Gesagte hier ebenfalls gilt. Im Unterschied zur ersten Ausführungsform wird das Netzteil 42 aber nicht über einen Optokoppler vom Schaltmodul ZPS ein- bzw. ausgeschaltet. Sondern direkt hinter dem Netzanschluss 44 ist ein bistabiles Relais 70 vorgesehen, das vom Schaltmodul ZPS über den Ausgang 8 angesteuert wird und die Versorgungsspannung vom Netzteil 42 abschaltet. In dieser Ausführungsform kann daher das Netzteil 42 sehr einfach aufgebaut sein und muss nicht steuerbar sein. Es kann sich hierbei um einen einfachen 50 Hz-Transformator, ggf. mit nachgeschalteter Elektronik für Gleichrichtung und Glättung der Versorgungsspannung handeln. Diese Ausführungsform eignet sich auch für Schaltnetzteile hoher Leistung (>100 W). Wie bereits erläutert verbleibt beim "Abschalten" eines Schaltnetzteils ein Restverbrauch in der Eingangsstufe (Filter etc.). Diese Verluste können bei einem Netzteil hoher Leistung so groß sein, dass man sich in diesem Fall für die vollständige Trennung vom Stromversorgungsnetz - hier durch ein Relais 70 - entscheiden wird.

Ein weiterer Unterschied zur ersten Ausführungsform liegt in der Ausführung des Pufferelements. Hier ist ein Akkumulator 72 vorgesehen, der über eine Ladeschaltung 74 geladen wird. Dieser zusätzliche Unterschied gegenüber der ersten Ausführungsform ist unabhängig von der Steuerung des Netzteils 42 über das Relais 70 oder den Optokoppler 66. Die Ausführungsformen dienen auch hierbei nur jeweils als Beispiele für entsprechende mögliche Kombinationen, wobei in einer konkreten Realisierung jeweils zu entscheiden sein wird, welche Art der Netzteilsteuerung und welche Art der Energieversorgung für das Schaltmodul ZPS gewählt wird.

Der bei der zweiten Ausführungsform verwendete Akkumulator 72 hat eine ausreichend große Kapazität, so dass ein Ruhebetrieb von deutlich länger als einem Tag möglich ist. Bevorzugt wird eine Kapazität von 100 mAh. Hierdurch ist ein Betrieb von sechs Wochen bei einem Stromverbrauch von 100 µA gewährleistet. Die Ladezeit für ein solches Element ist allerdings sehr lang und beträgt ca. 5 Stunden. Alternativ ist auch eine Schnellladung in weniger als einer Stunde möglich, erfordert jedoch zusätzlichen Schaltungsaufwand. Aufgrund der sehr langen Zykluszeit von sechs Wochen wird allerdings in der Regel gewährleistet sein, dass der im normalen Betrieb des elektrischen Geräts 40 erfolgende Ladevorgang ausreichend ist.
Sollte dennoch das Gerät für eine sehr lange Zeit im Ruhemodus verbleiben, sorgt in dieser Ausführungsform eine Zeitsteuerung der Ladezyklen für die Gewährleistung der Versorgungsspannung. Bei jedem Ausschalten wird das Schaltmodul ZPS vom Mikrocontroller der Geräte-Steuereinheit 45 so programmiert, dass nach einer sicher zu gewährleistenden Betriebszeit (zB. 5 Wochen) zeitgesteuert ein Ladezyklus ausgelöst wird, wenn zwischenzeitlich das Gerät nicht aktiviert wurde.

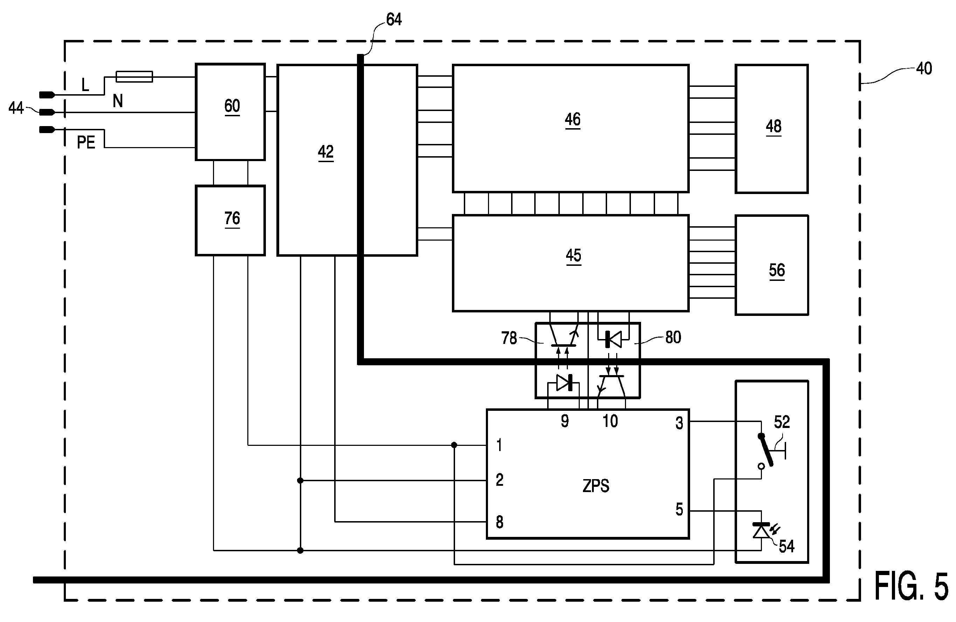

In Figur 5 ist eine dritte Ausführungsform eines elektrischen Geräts 40 dargestellt. Im Unterschied zu den beiden ersten Ausführungsformen ist hier kein Pufferelement für die Stromversorgung des Schaltmoduls ZPS vorgesehen, sondern das Schaltmodul ZPS wird durch eine Stromvefsorgunchaltung 76 direkt aus dem Stromversorgungsnetz mit elektrischer Energie versorgt. Die Stromversorgungsschaltung 76 ist am Netzfilter 60 angeschlossen. Sie beinhaltet einen Vorwiderstand im MΩ-Bereich und eine Gleichrichterschaltung. Setzt man als Ziel einen Energieverbrauch <0,05 W, so können bei Auslegung für den weltweiten Betrieb (world wide mains, 85 V bis 240 V) bis zu ca. 50 µA mit einem solchen Vorwiderstand entnommen werden. Wird die Schaltung für ein enger spezifiziertes Spannungsversorgungsnetz (zB. 200 V bis 240 V) ausgelegt, können höhere Ströme von über 100 µA entnommen werden. Noch höhere Ströme im Bereich von einigen mA können entnommen werden, wenn anstelle des Widerstands ein Kondensator verwendet wird.

Bei der dritten Ausführungsform nach Figur 5 ist das Schaltmodul ZPS nicht entsprechend der Norm ausreichend von der Primärseite isoliert, wie anhand des Verlaufs der die Isolation anzeigenden Linie 64 deutlich wird. Um weiterhin die normgemäß geforderte Isolation zu gewährleisten, müssen daher die Anschlüsse 9 und 10 mit Hilfe von Optokopplern 78, 80 an die Gerät-Steuereinheit 45 angeschlossen werden.

Bei einer alternativen Ausführungsform, die nicht separat dargestellt ist, entfallen die Optokoppler 78 und 80 in Fig. 5. Hier findet keine Kommunikation zwischen der Geräte-Steuereinheit 45 und dem Schaltmodul ZPS statt. Das Schaltmodul ZPS ist fest - zB. über die oben erläuterten Programmier-Pins - auf bestimmte Funktionen programmiert. Bei einer solchen Ausführungsform handelt es sich um eine recht starre Lösung, die aber Kostenvorteile vor allem dadurch bieten kann, dass kaum Eingriffe bzw. Modifikationen an dem elektrischen Gerät 40 notwendig sind. So kann die Aufwachschaltung ZPS in bestehende Gerätdesigns sehr einfach integriert werden.

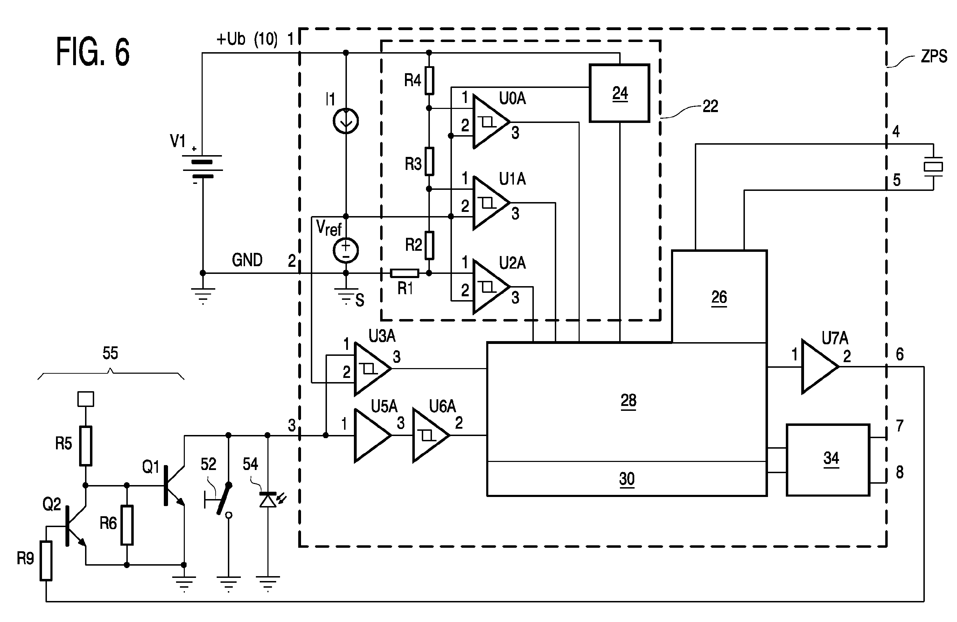

In Fig. 6 ist eine zweite Ausführungsform eines Schaltmoduls ZPS dargestellt. Diese Ausführungsform weist lediglich 8 Anschlüsse auf, so dass sie als integrierte CMOS-Schaltung in Standard-Dip-Gehäuse mit 8 Anschlüssen untergebracht werden kann.

Im Unterschied zur ersten Ausführungsform nach Fig. 1 weist die zweite Ausführungsform des Schaltmoduls ZPS nur einen Signaleingang 3 auf. Dieser Signaleingang 3 kann, wie in Fig. 6 dargestellt, als Kombinationseingang für Analogsignale, Fernsteuersignale und Tastersignale verwendet werden. Hierbei sind eine Infrarot-Empfängerdiode 54, ein Taster 52 und eine Analog-Eingangsschaltung 55 am Eingang 3 parallel zueinander gegen Masse geschaltet. Intern sind hinter dem Eingang 3 mit den Bausteinen U5A und U8A sowohl Auswertemittel für Fernsteuersignale als auch mit dem Komparator U3A eine Auswertemöglichkeit für ein Tastersignal vorgesehen. Der Verstärker U5A verstärkt das Signal der IR Diode (54) und versorgt diese mit einem kleinen Ruhestrom (so entsteht eine hochohmige Verbindung nach +Ub). Die Auslegung dieses Ruhestroms ist hierbei so gewählt, dass die Spannung bei geöffnetem T aster immer oberhalb der Schaltschwelle von U3A bleibt. Eventuell ist hierfür eine automatische Ruhestromeinstellung erforderlich. Wird der Taster (52) betätigt, sinkt die Spannung auf 0 V, so dass der Komparator U3A den Zustand wechselt. Aufgrund der somit unterschiedlichen Signale beim Empfang von Fernsteuer-Kommandos durch die Infrarot-Diode 54 einerseits und beim Betätigen des Tasters 52 andererseits kann die Steuereinheit 28 erkennen, welcher Kategorie ein Signal am Eingang 3 zuzuordnen ist.

Die Schaltung 55 ermöglicht den Anschluss weiterer Signale an einem Anschluss 53, wobei sie lediglich eine grobe Überwachung ausführt, ob ein Signal vorhanden ist, oder nicht. Das Signal steuert über R5 den Transistor Q1 an, der den Eingang 3 ähnlich wie der Taster auf 0V schaltet. Hierbei ergibt sich das Problem, dass im Betrieb des Geräts ständig ein Eingangssignal am Anschluss 53 anliegen wird, so dass über die Schaltung 55 der Eingang 3 ständig auf Masse liegt. Dann könnten keine weiteren Eingaben - Taster, Fernsteuersignale, etc. - mehr erkannt werden. Damit das Gerät nach dem Einschalten Befehle erkennen kann, wird die Schaltung mit Q2 und R9 bei Signal an 6 deaktiviert. Im Rahmen dieser Ausführungsform wird bei der Ansteuerung des Netzteils von Ausgang 6 davon ausgegangen, dass ein konstantes Ausgangssignal am Ausgang 6 anliegt, solange des Netzteil eingeschaltet ist. Dieses Ausgangssignal schaltet Q2 ein, wodurch das Signal S3 an Q1 kurzgeschlossen wird, so dass die Schaltung 55 im Betrieb deaktiviert ist. Falls eine Burst-Ansteuerung des Netzteils gewünscht wird, kann die Deaktivierung durch einen separaten Ausgang oder einige zusätzliche diskrete Bauteile realisiert werden.

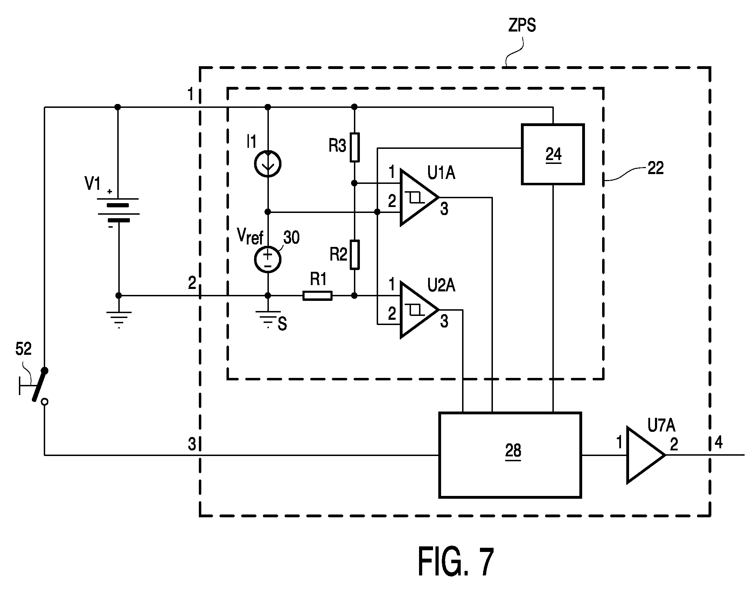

In Fig. 7 ist eine sehr einfache Verwendung eines ZPS-Schaltmoduls dargestellt. Das Schaltmodul ZPS dient in diesem Fall zum Ersatz des bisher in elektrischen Geräten häufig verendeten Netzschalters, der mechanisch das Netzteil von der Stromversorgung abschaltet. Dieser relativ teure Schalter kann durch die Kombination eines Tasters 52, der an das Schaltmodul ZPS angeschlossen ist und einer wie in den Fig 3 und 4 dargestellten gesteuerten Stromversorgung realisiert werden.

Das Schaltmodul ZPS in dieser einfachen Form enthält nur eine Spannungsvorsorgungs-Baugruppe 22 mit lediglich zwei Komparatoren, eine Steuereinheit 28 und einen Treiber U7A für die Ansteuerung der Stromversorgung (nicht dargestellt). Als Pufferelement ist eine auswechselbare (AlkMn) Batterie V1 vorgesehen. Hiermit kann die Schaltung bis zu sieben Jahre betrieben werden. Eine Datenverbindung mit dem elektronischen Gerät ist in diesem Fall nicht vorgesehen und auch nicht erforderlich. Eine derartige Minimallösung kann ohne oder mit nur minimalen Änderungen in bekannte Geräte eingesetzt werden.

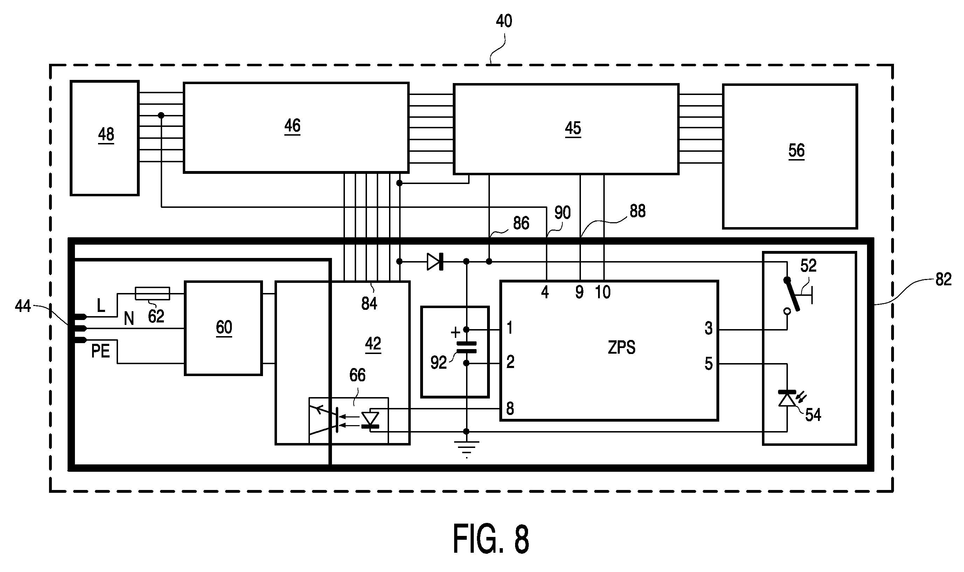

In Fig. 8 ist eine vierte Ausführungsform eines elektrischen Geräts 40 dargestellt. Das Gerät 40 mit seinen Funktionseinheiten 46, dem Eingang 48, der Gerätesteuereinheit 45 und der Vorderseite 56 mit den darauf befindlichen Bedienelementen ist wie in den Fig 1 bis 4 aufgebaut. Im Unterschied zu diesen enthält das Gerät 40 jedoch eine Netzteil-Baugruppe 82, in der die Funktionalitäten eines Netzteils und eines ZPS-Schaltmoduls zusammen integriert sind. Die Netzteil-Baugruppe 82 hat als Ausgänge die Spannungsversorgungs-Ausgänge 84 für die Funktionseinheiten 46. Ferner ist ein Puffer-Ausgang 86 vorgesehen. Kommunikationsanschlüsse 88 dienen zur bidirektionalen Kommunikation zwischen dem Schaltmodul ZPS und der Geräte-Steuereinheit 45. Die Netzteil-Baugruppe 82 weist ferner einen Eingang 90 für ein Nutzsignal auf, der mit den Signaleingängen 48 des Geräts 40 verbunden ist.

Die Netzteil-Baugruppe 82 weist ein SMPS-Netzteil 42 mit Optokopplern 66 zur Ein-/Ausschaltung auf. Primärseitig ist das Netzteil 42 über einen Filter 60 mit einem Netzanschluss 44 verbunden. Eine Gerätesicherung 62 ist ebenfalls vorgesehen. Als Pufferelement für die Energieversorgung des Schaltmoduls ZPS ist ein Super Cap 92 vorgesehen, der bei eingeschalteten Netzteil 42 über die Ausgänge 84 und eine Diode geladen wird. Die Netzteil-Baugruppe 82 weist einen Taster 52 und eine Infrarot-Empfangsdiode 54 auf. Diese Elemente sind an der Vorderseite des Geräts 40 positioniert. Hierfür muss entweder die Netzteil-Baugruppe 82 innerhalb des Geräts 40 so angebracht werden, dass die Elemente 52 und 54 von der Vorderseite her zugänglich sind, oder diese Elemente müssen separat an der Vorderseite vorgesehen werden und an entsprechende Anschlüsse der Netz-Baugruppe 82 angeschlossen sein. Von der Funktion her stimmt die Ausführungsform nach Fig. 8 mit der ersten Ausführungsform eines elektrischen Geräts nach Fig 3 überein, so dass das dort gesagte auch hier gilt. Lediglich von der Anordnung der Elemente her ist die Baugruppe ZPS bereits Bestandteil der Netz-Baugruppe 82. So können das Netzteil 42 und seine Ansteuerung (hier, als Beispiel, der Optokoppler 66) und das Schaltmodul ZPS bestmöglich aufeinander abgestimmt werden.

Alle vorstehend erläuterten Ausführungsbeispiele sind als beispielhafte Kombination der jeweils verwendeten Elemente anzusehen, wobei auch jeweils andere Kombinationen der Einzelelemente (zB. Schaltung durch Relais/Schaltung durch Optokoppler, Pufferung durch Batterie/Kondensator/Super Cap/Akkumulator usw.) möglich sind.

Andere Erweiterungen der Erfindung bzw. der vorstehend genannten Ausführungsformen sind die folgenden:
- Statt der Kombination eines Netzteils 42 mit einem Schaltmodul ZPS zu einer Netzteil-Baugruppe 82, wie in Fig. 8 beschrieben, kann auch ein für die Steuerung eines elektrischen Gerätes vorgesehener Mikrocontroller (Geräte-Steuereinheit 45) - beispielsweise durch Integration von Hardware entsprechender Funktion innerhalb des Mikrocontrollers bzw. durch Integration der beiden Funktionsteile in eine gemeinsames Gehäuse - mit den Funktionen als Schaltmodul ZPS versehen werden. In diesem Fall ist die "Aufwachschaltung" nicht mehr notwendig eine separate Baugruppe eines elektrischen Geräts.
- In den vorgenannten Ausführungsbeispielen wurde jeweils eine Infrarot-Diode direkt an einen Signaleingang des Schaltmoduls ZPS angeschlossen. Statt einer solchen Diode kann auch ein fertiges Infrarot-Empfängermodul verwendet werden, das bereits eine Vorverarbeitung der empfangenen Signale durchführt und vorzugsweise ein digitales Signal liefert.
- Eine als Empfänger für Fernsteuer-Signale geschaltete Infrarot-Diode benötigt einen Verstärker und eine Stromversorgung für Bias-Strom. Alternativ kann eine solche Diode aber auch in einer photovoltaiischen Betriebsart betrieben werden. In einer solchen Betriebsart wird die Diode nicht wie ein veränderlicher Widerstand verwendet, sondern beim Auftreffen von infrarotem Licht wird hierdurch an der Diode eine (geringe) Spannung erzeugt. Um im Leerlauf einen besonders niedrigen Stromverbrauch zu erzielen, könnte die Diode so geschaltet sein, dass sie im Leerlauf (d.h. wenn keine Signale vorhanden sind) zunächst im photovoltaiischen Betriebszustand beschaltet ist. Erst wenn die durch ein Signal auftretende Spannung detektiert wird, wird die Diode in den für Empfangsschaltungen üblichen, empfindlicheren photoresistiven Modus umgeschaltet und als herkömmliche IR-Empfängerdiode eingesetzt, so dass die Signale empfangen und verarbeitet werden können.
- Insbesondere bei der dritten Ausführungsform (Figur 5) ist der Kommunikationsanschluss 9, 10 mit dem bidirektionalen Optokoppler 78, 80 eine relativ aufwendige Lösung. Alternativ hierzu kann auch ein lediglich unidirektionales Interface vorgesehen sein, mit dem nur vom Schaltmodul ZPS zur Geräte-Steuereinheit 45 Daten übertragen werden können. Bei dieser kostensparenden Lösung wird das Schaltmodul ZPS bei Aktivierung durch den Fernsteuereingang 5 nach einer ausreichend bemessenen Einschaltverzögerung (zum Starten der Geräte-Steuereinheit 45) die empfangenen Fernsteuer-Codes über das unidirektionale Interface verschicken. Alle danach empfangenen Fernsteuersignale werden im weiteren Betrieb direkt über das unidirektionale Interface versendet. Diese Lösung lässt sich auch gut mit der Ausführungsform nach Figur 8 (Schaltmodul ZPS integriert in Netzteilbaugruppe 82) kombinieren. Als weitere Alternative kann für das Interface auch der in vielen SMPS ohnehin vorhandene Optokoppler genutzt werden.
- Die Zeitschaltuhr-Funktion kann verwendet werden, um auch solche Geräte in den Ruhezustand zu versetzen, die zu bestimmten, festgelegten Zeiten eingeschaltet werden müssen. Beispielsweise Set-Top-Boxen, die zu vorbestimmten Zeiten Programminformationen erhalten oder Videorecorder, deren Timer nach Art des VPS-Systems gesteuert sind, können so ebenfalls in einen Ruhezustand versetzt werden, in dem das entsprechende Netzteil ausgeschaltet ist.

- Die Fernsteuer-Funktionalität wurde hier am Beispiel der gängigen Infrarot-Fernsteuerung erläutert. Der Fachmann kann dies problemlos auch auf andere Formen der Fernsteuerung (zB. Funk, Ultraschall, etc.) übertragen, wobei er je nach gewählter Signalart die jeweiligen Besonderheiten und Erfordernisse (Signalform, Detektion, Empfang, Verarbeitung, En- und Decodierung, etc.) beachten wird.

## Patentansprüche

1. Aufwachschaltung für ein elektrisches Gerät (40) mit
- einem oder mehreren Signaleingängen (3, 4, 5) und
- einer Steuereinheit (28) und
- einem Steuerausgang (8) zur Steuerung eines Netzteils (42),
- bei der die Steuereinheit (28) beim Auftreten eines vordefinierten Aufwachereignisses an dem Signaleingang (3, 4, 5) eine Aufwachprozedur einleitet,
- bei der am Steuerausgang (8) ein Signal zum Einschalten eines Netzteils (42) erzeugt wird.

2. Aufwachschaltung nach Anspruch 1, bei der einer der Signaleingänge ein Nutzsignal-Eingang (4) für ein Nutzsignal eines elektrischen Geräts (40) ist.

3. Aufwachschaltung nach einem der vorangehenden Ansprüche, bei der einer der Signaleingänge ein Taster-Eingang (3) für den Anschluss eines Tasters ist.

4. Aufwachschaltung nach einem der vorangehenden Ansprüche, bei der einer der Signaleingänge ein Fernsteuereingang (5) für die Signale einer drahtlosen Fernsteuerung ist.

5. Aufwachschaltung nach Anspruch 4, bei der der Signaleingang (5) zum Anschluss eines Infrarot-Sensorelements (54) geeignet ist, um die Signale einer Infrarot-Fernsteuerung zu empfangen.

6. Aufwachschaltung nach einem der vorangehenden Ansprüche, bei der einer der Signaleingänge ein digitaler Dateneingang ist, der an beliebige digitale Schnittstellen, wie beispielsweise Computernetzwerke anschließbar ist.

7. Aufwachschaltung nach einem der vorangehenden Ansprüche, bei der ein Speicher (30) vorgesehen ist.

8. Aufwachschaltung nach einem der vorangehenden Ansprüche, bei der eine Uhr (26) vorgesehen ist.

9. Aufwachschaltung nach Anspruch 8, bei der
- die Steuereinheit (28) eine Zeitschalt-Funktion realisiert,
- bei der ein Aufwachzeitpunkt voreingestellt ist,
- und bei dem Erreichen des Aufwachzeitpunktes die Aufwachprozedur eingeleitet wird.

10. Aufwachschaltung nach einem der vorangehenden Ansprüche, bei der ein oder mehrere Takt-Eingänge (6, 7) vorgesehen sind.

11. Aufwachschaltung nach einem der vorangehenden Ansprüche, bei der ein oder mehrere Kommunikationsanschlüsse (9,10) zum Versenden und/oder Empfangen von Daten von/zu der Steuereinheit (28) und/oder dem Speicher (30) vorgesehen sind.

12. Aufwachschaltung nach einem der vorangehenden Ansprüche, bei der die Schaltung (ZPS) als ein einziger integrierter Baustein aufgebaut ist.

13. Aufwachschaltung nach einem der vorangehenden Ansprüche, bei der die Steuereinheit (28) die am Fernsteuer-Eingang (5) eintreffenden Signale über einen Kommunikationsanschluss (9,10) weiterleitet.

14. Aufwachschaltung nach einem der vorangehenden Ansprüche, bei der
- ein Speicher Fernsteuer-Aufwachsignale speichert,
- wobei die Steuereinheit (28) am Fernsteuereingang (5) eintreffende Signale mit den gespeicherten Aufwachsignalen vergleicht
- und bei Übereinstimmung die Aufwachprozedur einleitet.

15. Elektrisches Gerät mit
- einer oder mehreren Funktionseinheiten (46)
- und einem Netzteil (42) zum Anschluss an eine Stromversorgung (44) und zur Speisung der Funktionseinheiten (46) mit elektrischer Energie,
**dadurch gekennzeichnet,**
**dass**
- das Gerät (40) in einen Ruhezustand schaltbar ist,
- in dem das Netzteil (42) abgeschaltet ist,
- wobei eine Aufwachschaltung (ZPS) aktiv bleibt,
- die beim Eintritt eines Aufwachereignisses das Netzteil (42) des Geräts (40) einschaltet.

16. Elektrisches Gerät nach Anspruch 15 mit einer Aufwachschaltung (ZPS) nach einem der Ansprüche 1 - 14.

17. Elektrisches Gerät nach einem der Ansprüche 15 oder 16, bei dem
- eine Stromversorgungsschaltung (66) zur Versorgung der Aufwachschaltung (ZPS) mit elektrischer Energie vorgesehen ist,
- wobei die Stromversorgungsschaltung elektrische Energie direkt aus dem Stromversorgungsnetz entnimmt.

18. Elektrisches Gerät nach einem der Ansprüche 15 oder 17, bei dem ein Energiespeicher (50) zur Versorgung der Aufwachschaltung (ZPS) mit elektrischer Energie vorgesehen ist.

19. Elektrisches Gerät nach Anspruch 18, bei dem
- der Energiespeicher ein wiederaufladbares Element (58, 72) ist,
- wobei bei eingeschaltetem Netzteil (42) der Energiespeicher aufgeladen wird.

20. Elektrisches Gerät nach Anspruch 19, bei dem
- beim Umschalten des Geräts (40) in den Ruhezustand die Steuereinheit (28) der Aufwachschaltung (ZPS) so programmiert wird,
- dass sie das Gerät (40) nach einer vorbestimmten Zeitspanne wieder in den Betriebszustand versetzt, so dass der Energiespeicher (58, 72) wieder aufgeladen wird,
- wobei die Zeitspanne so bemessen ist, dass das wiederaufladbare Element (58, 72) für diese Zeitspanne ausreichend elektrische Energie für den Betrieb der Aufwachschaltung (ZPS) liefert.

21. Elektrisches Gerät nach einem der Ansprüche 15 - 20, oder Aufwachschaltung nach einem der Ansprüche 1-14, mit einer Schaltung zur Überwachung des verbleibenden Inhalts des Energie-Speichers (50) vorgesehen ist.

22. Verfahren zur Steuerung eines elektrischen Geräts, bei dem
- ein elektrisches Gerät (40), das eine oder mehrere Funktionseinheiten (46) und mindestens ein Netzteil (42) zur Speisung der Funktionseinheiten (46) mit elektrischer Energie aufweist,
- von einem Betriebszustand in einen Ruhezustand umgeschaltet wird,
- wobei im Betriebszustand mindestens ein Netzteil (42) eingeschaltet ist, während im Ruhezustand alle Netzteile (42) ausgeschaltet sind,
- wobei im Ruhezustand jedoch eine Aufwachschaltung (ZPS) aktiv bleibt,
- die einen oder mehrere Signaleingänge (3, 4, 5) auf das Auftreten eines Aufwachereignisses überwacht,
- und bei Auftreten eines Aufwachereignisses das Gerät (40) vom Ruhezustand wieder in den Betriebszustand umschaltet.

23. Verfahren nach Anspruch 22, bei dem
- in der Aufwachschaltung (ZPS) das auslösende Aufwachereignis abgespeichert wird,
- und nach dem Einschalten von dem Gerät (40) abgefragt wird.

24. Verfahren nach einem der Ansprüche 22 oder 23, bei dem
- die Aufwachschaltung (ZPS) über eine Kommunikationsschnittstelle programmiert wird,
- wobei eingestellt wird, welche an den Eingängen auftretenden Ereignisse Aufwachereignisse darstellen sollen.

25. Netzteil-Baugruppe für ein elektrisches Gerät mit
- einem Netzteil (42),
**dadurch gekennzeichnet,**
**dass**
- Schaltmittel (66, 70) zum Ein-/Ausschalten des Netzteils (42) vorgesehen sind,
- und eine Aufwachschaltung (ZPS) mit einem oder mehreren Signaleingängen (3, 4, 5) vorgesehen ist,
- wobei die Aufwachschaltung (ZPS) bei ausgeschaltetem Netzteil (42) aktiv ist und beim Auftreten eines Aufwachereignisses an einem der Signaleingänge das Schaltelement (66, 70) so steuert, dass das Netzteil (42) eingeschaltet wird.
